# EUROPÄISCHE PATENTSCHRIFT

(11) **EP 0 559 610 B1**
(45) Veröffentlichungstag und Bekanntmachung des Hinweises auf die Patenterteilung: **18.10.1995**
(21) Anmeldenummer: 93810117.7
(22) Anmeldetag: 22.02.1993
(51) Int. Cl.: B29C 65/10, B29C 65/20, E04D 15/04

(54) **Fahrbarer Grossflächen-Schweissautomat zur Verschweissung von Kunststoffolien**
Large surface automatic welder for welding plastic sheets
Dispositif automatique de soudage pour souder des éléments de grande surface en matière plastique

(30) Priorität: 06.03.1992 CH 720/92
(43) Veröffentlichungstag der Anmeldung: 08.09.1993
(73) Patentinhaber: MEISTERMATIC AG, CH-6060 Sarnen (CH)
(72) Erfinder: Meister, Anton, CH-6060 Sarnen (CH)
(74) Vertreter: OK pat AG

(56) Entgegenhaltungen:
- EP-A- 0 258 984
- EP-A- 0 279 306
- CH-A- 563 226
- DE-A- 3 115 662
- US-A- 4 743 332

## Beschreibung

Die Erfindung betrifft einen fahrbaren Grossflächen-Schweissautomaten zur Verschweissung von einander über die Breite einer Zone überlappenden Kunststoffolien, mit einem Rahmen, der aus einem ersten, in Fahrrichtung des Automaten verlaufenden Schenkel und einem zweiten, quer dazu angeordneten Schenkel gebildet ist. Dabei weist der erste Schenkel Mittel zum Verschweissen der beiden Folien in der genannten Zone sowie auf dieser Zone laufende Andrückmittel zum Belasten der verschweissten Folien auf, und der zweite Schenkel ist mit Fahrrollen versehen, die auf einer gemeinsamen Achse sitzen. Die genannten Andrückmittel umfassen eine Andrückrolle, die mit den zu ihr sowohl in Fahrrichtung als auch quer dazu versetzt angeordneten Fahrrollen über einen gemeinsamen Antrieb verbunden ist.

Solche Schweissautomaten dienen dazu, grossflächig ausgelegte und eine beachtliche Länge aufweisende Kunststoff-Folienbahnen, wie sie insbesondere zur Abdichtung von Dächern, Böden und Wänden verwendet werden, miteinander zu verschweissen. Zu diesem Zweck weist ein solcher Automat z.B. eine Heissluftdüse auf, die zwischen die sich überlappenden Ränder der Folien greift. Die austretende Heissluft schmilzt die beiden Ränder auf, welche dann gegeneinander gedrückt werden und dabei miteinander verschweissen.

Ein Automat der vorgenannten Art ist bereits in der EP-A-0 279 306 dargestellt und beschrieben. Dieser hat sich zwar im wesentlichen bewährt; es zeigten sich aber gewisse Schwierigkeiten beim Vorschub des Gerätes auf den ausgebreiteten Folien und bei der Einhaltung der Fahrspur entlang der Ueberlappungszone, vor allem wenn Unebenheiten der Unterlage zu überfahren sind.

Hierzu soll kurz auf die Probleme eingegangen werden, die sich bei der Konstruktion eines solchen Automaten ergeben. Dieser muss, wie erwähnt, entlang von langen Folienbahnen möglichst geradlinig laufen. Hierfür eine Lenkung vorzusehen nach Art eines selbstfahrenden Fahrzeuges, also mit einer Lenkachse, wäre kaum zweckmässig, weil dabei in den Lenkorganen ein Spiel eingeführt würde, das einen Geradlauf erst recht erschweren würde, abgesehen vom erforderlichen Konstruktions- und Steuerungsaufwand. Wenn aber keine Lenkung vorgesehen ist, müssten die Rollen des Automaten, die gemäss dem genannten Stand der Technik alle angetrieben sind, den genau gleichen Aussendurchmesser aufweisen. Hierbei ist zu berücksichtigen, dass wenigstens die Fahrrollen an ihrem Umfang einen Reibbelag aufweisen, also einen aufgezogenen Ring aus einem elastisch zusammendrückbaren Material, wodurch ein Geradlauf wiederum erheblich erschwert wird. Ebenfalls ist es nicht möglich, die in Fahrrichtung vorderen Fahrrollen anstatt anzutreiben nur lose mitlaufen zu lassen, weil die (dann allein angetriebene) hintere Andrückrolle zur Spur der vorderen Fahrrollen seitlich versetzt ist; durch den Rollwiderstand der letzteren würde daher ein Drehmoment in der Fahrebene entstehen, was zu einem relativ raschen Abweichen vom Geradlauf führen würde. - Eine weitere wichtige Anforderung an einen solchen fahrbaren Schweissautomaten besteht darin, dass ein Aufstauchen bzw. das Entstehen von Wellen oder "Blasen" in den ausgelegten Folienbahnen infolge der Längsbewegung möglichst vermieden werden muss. Ein solches Aufstauchen kann aber schon bei geringsten Unterschieden der Umfangsgeschwindigkeiten der Andrückmittel und der Fahrrollen auftreten.

Die vorliegende Erfindung bezweckt daher, einen Schweissautomaten der genannten Art so weiterzuentwickeln, dass dessen Geradlauf gewährleistet ist und insbesondere durch Unebenheiten der Unterlage, auf welcher die Folien aufliegen, kaum gestört wird, und dass ferner das flache Aufliegen der Folien durch das fahrende Gerät nicht beeinträchtigt wird.

Diese Aufgabe wird erfindungsgemäss durch eine Ausgestaltung nach den kennzeichnenden Merkmalen des Anspruches 1 gelöst. Damit wird insbesondere ein vollkommener Gleichlauf der auf den Folien abrollenden Antriebsmittel erreicht. Ferner ermöglicht die Ausgestaltung der Andrück- und Fortbewegungsvorrichtung auch eine günstige Folienführung und Anordnung der Schweissmittel, insbesondere im Falle einer Heissluftdüse.

Ein Ausführungsbeispiel des erfindungsgemässen Schweissautomaten wird nachstehend in Verbindung mit der Zeichnung näher beschrieben. Es zeigen:
- Fig. 1: eine Draufsicht auf den Automaten, wobei ein Teil seines Rahmens strichpunktiert gezeichnet und verschiedene darauf angeordnete Teile nur schematisch angedeutet sind,
- Fig. 2: eine Seitenansicht des Automaten von rechts in Fig. 1 gesehen, unter Weglassung einzelner Teile,
- Fig. 3: eine Ansicht des Automaten von seiner Unterseite her,
- Fig. 4: eine teilweise auseinandergezogene Schnittdarstellung der Andrück- und Fortbewegungsvorrichtung, und
- Fig. 5: eine Seitenansicht des Automaten von links in Fig. 2 gesehen.

Wie in der oben erwähnten EP-A-0 279 306 bereits beschrieben, dient der Automat dazu, zwei nebeneinander ausgebreitete Kunststoffolien F1, F2, die einander an ihren Rändern R1, R2 überlappen, innerhalb der so gebildeten Zone S miteinander zu verschweissen. Während dieses Schweissvorganges bewegt sich der Automat in Richtung des Pfeiles P, also parallel zum Rand R1 der in der Zone S oberen Folie F1. Der Rahmen 3 des Automaten ist wiederum L-förmig, mit einem sich in Fahrrichtung erstrekkenden Schenkel 2 und einem quer dazu verlaufenden Schenkel 4. Die Verschweissung erfolgt durch eine Heizdüse 5, deren Mündung 6 zwischen die Oberseite der unteren Folie F2 und die Unterseite der oberen Folie F1 vor Beginn des Fahrens bzw. des Verschweissens eingeführt wird. Der Rand der oberen Folie F1 muss daher etwas nach oben gewölbt und vorübergehend (elastisch) gedehnt werden. Die Heissluft schmilzt die beiden Folienoberflächen auf und diese werden dann, wie unten beschrieben, zusammengepresst. Die Luft wird von einem Gebläse 7 einem Heizaggregat 8 zugeführt, dort erhitzt und strömt dann über eine Rohrleitung oder einen Schlauch 9 zur Düse 5. Da die Heissluftschweissung selbst nicht Gegenstand der Erfindung ist, sind diese Teile nur symbolisch dargestellt.

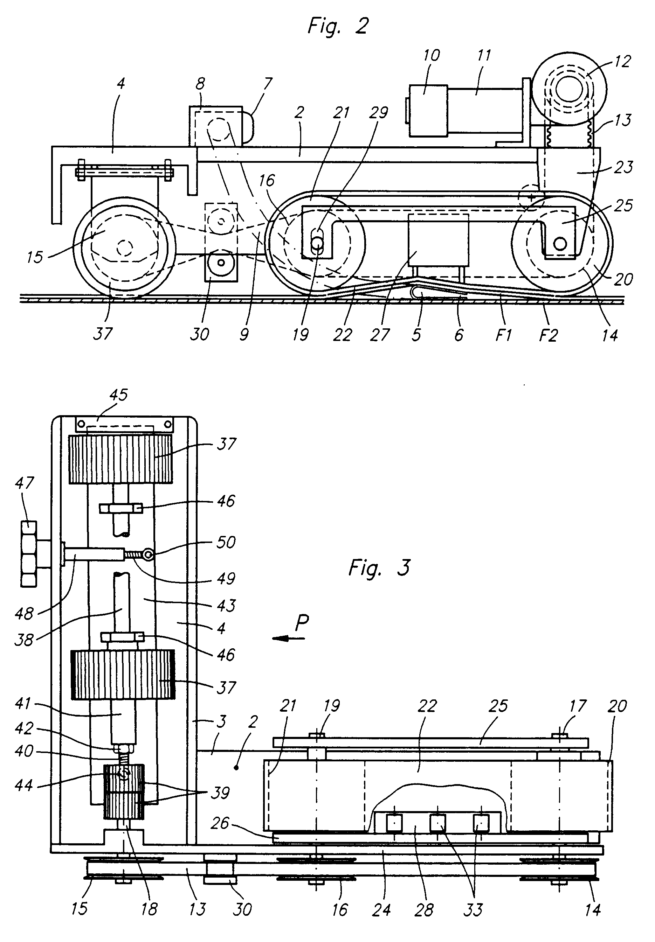

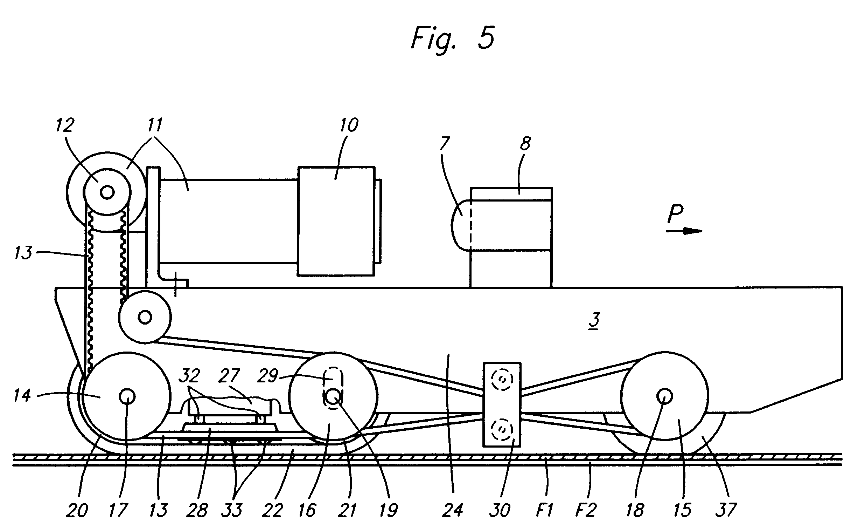

Ein Motor 10 treibt mittels eines Getriebes 11, vorzugsweise ein Schneckengetriebe, eine erste Zahnriemenscheibe 12 an. Diese wiederum setzt einen Zahnriemen 13 in Bewegung, welcher Achsantriebsräder 14, 15, 16 (siehe auch Fig. 2 und 5) antreibt. Das Rad 14 treibt eine Welle 17, das Rad 15 eine Welle 18 und das Rad 16 eine Welle 19 an.

Auf der Welle 17 sitzt eine Andrückrolle 20, welche einer Andrück-und Fortbewegungsvorrichtung angehört (Fig. 4). Sie wird durch eine zweite Andrückrolle 21 ergänzt, welche auf der Welle 19 sitzt, von dieser angetrieben ist und mit der ersten bzw. hinteren Andrückrolle 20 über ein Andrückband 22 verbunden ist. Das Andrückband 22 und die in Fahrrichtung vordere Rolle 21 weisen eine Breite auf, die der vorgesehenen Ueberlappung der Folien F1, F2 etwa entspricht, also der Breite der Zone S. Die hintere Rolle 20 ist jedoch schmäler; auf sie wird im Zusammenhang mit Fig. 4 noch zurückgekommen. Sie ist auf der Welle 17 zwischen einer etwa trapezförmigen Lagerplatte 23 (Fig. 2) und einer Seitenwand 24 des Schenkels 2 gelagert. Die zweite oder vordere Andrückrolle 21 hat genau den gleichen Durchmesser wie die Rolle 20. Gleichzeitig muss sie jedoch in der Lage sein, allfällige Unebenheiten aufzufangen, die überfahren werden, wenn die obere Folie F1 durch diese Rolle auf die untere Folie F2 gepresst wird. Daher muss die - ebenfalls angetriebene - Rolle 21 höhenverstellbar gelagert sein. Dies wird durch zwei seitliche Halter 25, 26 erreicht. Beide Halter schwenken um die Welle 17, auf welcher sie gelagert sind, und lagern ihrerseits die Welle 19 mit der vorderen Rolle 21.

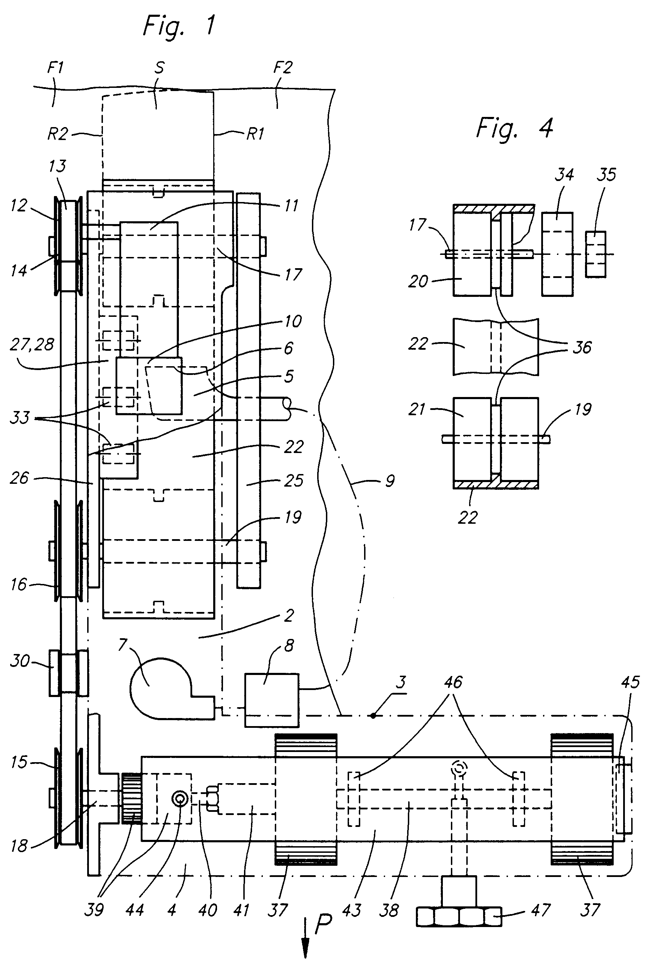

Der Halter 26 ist zwischen der Seitenwand 24 und einem plattenförmigen Sockel 27 geführt, auf welchem ein Andrückschuh 28 federnd abgestützt ist. Der Sockel 27 weist einen entsprechenden Abstand von der Seitenwand 24 auf, ist aber mit ihr starr verbunden. Der dazwischen liegende Halter 26 ist daher vertikal beweglich geführt, wobei eine Seitenverschiebung der Rolle 21 verhindert ist. Wie vor allem aus den Fig. 1 und 2 ersichtlich ist, befindet sich die Heissluftdüse 5 im Bereich zwischen den beiden Andrückrollen 20 und 21. Sie hebt dort die obere Folie F1 und das untere Trum des Andrückbandes 22 etwas an und bildet eine Tasche, in welcher die Heissluft durch den nach hinten gerichteten Düsenschlitz 6 austreten kann. Die genannte Tasche ist vorn und hinten durch die aufliegenden Andrückrollen und dazwischen seitlich durch den Pressschuh 28 (Fig. 5) geschlossen.

Nun ist aber die höhenverstellbare Rolle 21 durch die Zahnriemenscheibe 16 angetrieben, die sich ausserhalb der Seitenwand 24 befindet. Diese weist daher einen Vertikalschlitz 29 (Fig. 2) auf, in welchem sich die Welle 19 auf- und abbewegen kann. Dank des Keilriemenantriebes kann sich die Zahnriemenscheibe 16 gegenüber den fest angeordneten Zahnriemenscheiben 14, 15 in der Höhe ohne weiteres verstellen. Damit bei dieser Bewegung die Scheibe 16 nicht ausser Eingriff mit dem oberen oder unteren Trum des Riemens 13 kommt, ist zwischen den Scheiben 15 und 16 ein Riemenspanner 30 angeordnet. Er besteht aus zwei seitlichen Lagerplatten und zwei Rollen, zwischen denen die beiden Trums hindurchlaufen. Der Riemenspanner 30 ist vom Riemen 13 selber zwischen den Scheiben 15 und 16 "fliegend" zentriert.

Der Andrückschuh 28 ist am feststehenden Sockel 27 mittels Federn 32 vertikal beweglich gelagert und mit Rollen 33 versehen, die auf das Andrückband 22 und über dieses auf die Folien drükken. Er ist, wie erwähnt, seitlich angeordnet, und zwar über dem Rand R2 der untenliegenden Folie F2 (Fig. 1), so dass die Luft aus der Düse 5 nach der anderen Seite über der Folie F2 ins Freie entweicht.

Der durch die gleichen Zahnriemenscheiben 14, 16 bewirkte Synchronlauf der beiden Andrückrollen 20, 21 sowie die beschriebene Möglichkeit der Vertikalbewegung der vorderen Rolle 21 sind Massnahmen für den Geradlauf des Automaten. Sie werden durch eine weitere vorteilhafte Ausgestaltung der Andrück- und Fortbewegungsvorrichtung ergänzt, die im folgenden erläutert ist: Um eine besonders gute Anpressung über die Breite der Vorrichtung bzw. der Zone S zu erreichen, ist die hintere Andrückrolle 20 wesentlich schmäler als die Rolle 21 ausgeführt (Fig. 4) und durch eine Ringrolle 34 ergänzt, die über einer Nabe 35 läuft. Die letztere sitzt fest auf der Welle 17, während die massive, schwere Ringrolle 34 mit erheblichem Radialspiel auf ihr läuft. Sie sorgt dadurch für ein stetiges, sattes Anpressen der Folienränder am hinteren Ende der Vorrichtung. Wäre die Rolle 20 gleich breit wie die vordere Rolle 21, könnte sich beim Ueberfahren von nur wenig breiten Unebenheiten eine Tendenz zur Schiefstellung des Automaten ergeben, was wiederum Abweichungen vom Geradlauf verursachen könnte. Die Ringrolle 34 wird durch das Andrückband 22 mitgenommen, da sie direkt neben der Rolle 20 liegt. Das Andrückband 22 weist auf der Innenseite einen Längssteg auf, der in je einer Führungsnut 36 in den Rollen 20, 21 läuft.

Eine weitere Massnahme, den Geradlauf zu gewährleisten und vor allem das Aufwölben der Folien infolge der Fahrbewegung des Automaten zu verhindern, ist hauptsächlich aus Fig. 3 ersichtlich. Die Massnahme betrifft den Antrieb der Welle 38 ausgehend von der Zahnriemenscheibe 15. Die letztere hat die selbe Zähnezahl wie die Scheiben 14, 16, und die von ihr angetriebenen Fahrrollen 37 haben den gleichen Durchmesser wie die Rollen 20, 21 mit dem darüber laufenden Band 22. Die Welle 18, auf der die Scheibe 15 sitzt, dient zum Antrieb der Fahrrollen 37, die nicht nur eine beträchtliche Distanz vor der Andrückrolle 21 laufen, sondern zu ihr auch stark seitlich versetzt sind und daher nicht mehr auf der Zone S mit der doppelten Foliendicke laufen, sondern auf der Folie F2 allein. Diese seitliche Versetzung verhindert eine Schrägstellung des Automaten quer zur Fahrrichtung.

Es hat sich gezeigt, dass bei "starrem", synchronen Antrieb der Achsen 17, 19 und der Fahrrollen-Achse immer wieder hartnäckige Aufwölbungen der Folien auftreten. Da die Fahrrollen 37 einen gummielastischen Reibbelag aufweisen, können sich u.a. je nach Gewichtsverteilung oder Gewichtsbelastung des Automaten unterschiedliche effektive Antriebsradien zwischen den Fahrrollen 37 und der Andrück- und Fortbewegungsvorrichtung ergeben. Aus diesem Grunde erfolgt nunmehr der Antrieb der Fahrrollen 37 von der Zahnriemenscheibe 15 nicht unmittelbar mittels einer durchgehenden Welle. Vielmehr sind zwei miteinander fluchtende, unterteilte Wellen oder Achsen 18 und 38 vorgesehen. Dazwischen ist eine elastische Rutschkupplung mit zwei elastischen Gummiblöcken 39 angeordnet, die stirnseitig unter Axialdruck aneinanderliegen. Der Block auf der Welle 38 sitzt auf einem Gewindebolzen 40, der in einer Gewindehülse 41 drehbar gelagert und mit einer Mutter 42 in seiner axialen Relativlage gesichert ist. Damit kann der erforderliche Kupplungsdruck eingestellt werden. Dieser muss die Mitnahme der Achse 38 mit den Fahrrollen 37 gewährleisten, darf aber anderseits nicht zu stark sein, damit ein Ausgleich von Umdrehungs-Unterschieden durch entsprechenden Schlupf zwischen den Blöcken 39 möglich ist.

Um schliesslich auch die Möglichkeit einer genauen Richtungseinstellung der Fahrrollen 37 zu schaffen, ist es zweckmässig, die Achse 38 einstellbar zu lagern. Zu diesem Zweck ist an der Unterseite des Schenkels 4 eine Schwenkplatte 43 angebracht. Sie ist an ihrem dem Schenkel 2 zugewandten Ende am Schenkel 4 in einem Zapfen 44 gelagert, um welchen sie schwingen kann, und gleitet am anderen Ende auf einem Auflager 45. An der Schwenkplatte 43 sind zwei Achshalter 46 für die Welle 38 angebracht. Das Verschwenken erfolgt mittels eines Drehknopfes 47 mit Gewindehülse 48 und Gewindebolzen 49, der mittels eines Stiftes 50 an der Platte 43 angelenkt ist. Durch Verstellen des Drehknopfes 47 kann die Schwenkplatte 43 aus einer (in Fig. 3 stark übertrieben gezeichneten) Schrägstellung in eine zur Mittelachse des Schenkels 4 genau parallele Lage gebracht werden, und damit sind auch die Rollen 37 genau in Richtung des Schenkels 2 bzw. auf die Laufrichtung des Bandes 22 ausgerichtet, so dass jede Abweichung vom Geradlauf behoben werden kann. Mit der vom Zapfen 44 weit entfernten Anordnung der Schwenkvorrichtung 47 - 50 kann eine sehr feine Einstellung vorgenommen werden.

## Patentansprüche

1. Fahrbarer Grossflächen-Schweissautomat zum Verschweissen von einander über die Breite einer Zone (S) überlappenden Kunststoffolien (F1, F2), mit einem Rahmen (3), der aus einem ersten, in Fahrrichtung des Automaten verlaufenden Schenkel (2) und einem zweiten, quer dazu angeordneten Schenkel (4) gebildet ist, wobei der erste Schenkel (2) Mittel (5, 6) zum Verschweissen der Folien (F1, F2) in der genannten Zone sowie auf dieser laufende Andrückmittel (20, 28) zum Belasten der verschweissten Folien (F1, F2) aufweist und der zweite Schenkel (4) mit auf einer gemeinsamen Achse (38) sitzenden Fahrrollen (37) versehen ist, und wobei die Andrückmittel eine Andrückrolle (20) umfassen, die mit den zu ihr sowohl in Fahrrichtung als auch quer dazu versetzt angeordneten Fahrrollen (37) über einen gemeinsamen Antrieb (10, 13) verbunden ist, dadurch **gekennzeichnet**, dass die am ersten Schenkel (2) auf einer Achse (17) gelagerte Andrückrolle (20) durch relativ zu ihr in der Höhe frei bewegliche, vom gemeinsamen Antrieb (10, 13) über eine weitere Achse (19) mit angetriebene, weitere Andrückmittel (21, 22, 34) zu einer Andrück- und Fortbewegungsvorrichtung ergänzt ist, und dass die die Fahrrollen (37) tragende Achse (38) von einer separaten Antriebsachse (18) über eine elastische Rutschkupplung (39) angetrieben ist.

2. Schweissautomat nach Anspruch 1, dadurch gekennzeichnet, dass die Andrück- und Fortbewegungsvorrichtung eine der genannten Andrückrolle (20) voranlaufende und mit ihr von einem umlaufenden Andrückband (22) umschlungene zweite Andrückrolle (21) aufweist, deren Achse (19) vom gemeinsamen Antrieb angetrieben und in zwei in Vertikalebenen schwenkbaren Haltern (25, 26) gelagert ist.

3. Schweissautomat nach Anspruch 2, gekennzeichnet durch eine neben der ersten Andrückrolle (20) achsparallel angeordnete, aber mit Spiel lose auf ihrer Achse (17) sitzende Ringrolle (34), die vom Andrückband (22) ebenfalls umschlungen und von diesem angetrieben ist.

4. Schweissautomat nach Anspruch 3, dadurch gekennzeichnet, dass die Breite der zweiten Andrückrolle (21) gleich der Gesamtbreite der ersten (20) und der daneben angeordneten Ringrolle (34) ist.

5. Schweissautomat nach Anspruch 2, dadurch gekennzeichnet, dass einer der beiden Halter (26) zwischen einer vertikalen Wand (24) des ersten Schenkels (2) und einem zu ihr mit Abstand befestigten Sockel (27) vertikal beweglich geführt ist, wobei am Sockel (27) ein das Andrückband (22) beaufschlagender Pressschuh (28) federnd abgestützt ist.

6. Schweissautomat nach Anspruch 2, gekennzeichnet durch eine zwischen der ersten (20) und der zweiten Andrückrolle (21) unter dem unteren Trum des Andrückbandes (22) angeordnete Heissluftdüse (5), welche zwischen den einander überlappenden Folien (F1, F2) eine Tasche bildet, welche auf zwei Seiten von den Andrückrollen (20, 21) und auf einer dritten Seite von einem Pressschuh (28) begrenzt ist.

7. Schweissautomat nach Anspruch 1, dadurch gekennzeichnet, dass die die Fahrrollen (37) tragende Achse (38) zwecks Einstellung der Rollen-Fahrspur in bezug auf den Rahmen (3) einstellbar ist.

8. Schweissautomat nach Anspruch 7, dadurch gekennzeichnet, dass die Fahrrollen-Achse (38) an einer Schwenkplatte (43) gelagert ist, die am genannten zweiten Schenkel (4) über eine Schwenkachse (44) angelenkt und an einer von der Schwenkachse entfernten Stelle über eine Verstellvorrichtung (47, 48, 49, 50) mit dem Schenkel (4) verbunden ist.

9. Schweissautomat nach Anspruch 1, dadurch gekennzeichnet, dass die elastische Rutschkupplung (39) zwei gummielastische Blöcke aufweist, die je an den einander zugekehrten Enden der separaten Antriebsachse (18) und der Fahrrollen-Achse (38) befestigt sind, wobei der eine der Blöcke zwecks Einstellung des Anpressdrucks zum anderen Block auf seiner Achse axial verschiebbar angeordnet ist.

10. Schweissautomat nach Anspruch 1, wobei die gemeinsam angetriebenen Achsen je mit zueinander fluchtenden, von einem Antriebsriemen (13) umschlungenen Riemenscheiben (14, 15, 16) versehen sind, gekennzeichnet durch einen beide Trums des Riemens (13) übergreifenden, bezüglich des Rahmens (3) fliegend angeordneten Riemenspanner (30).

## Claims

1. Mobile large-area automatic welder for welding together plastics films (F1, F2) which mutually overlap over the width of a zone (S), having a frame (3), which is formed from a first limb (2) running in the running direction of the welder and a second limb (4) disposed transversely thereto, the first limb (2) exhibiting means (5, 6) for welding together the films (F1, F2) in the said zone and pressure means (20, 28), running on this zone, for placing load upon the welded-together films (F1, F2), and the second limb (4) being provided with running rollers (37) seated on a common axle (38), and the pressure means comprising a pressure roller (20) connected to the running rollers (37), which are offset relative to the said pressure roller both in the running direction and transversely thereto, by a common drive (10, 13), characterized in that the pressure roller (20) mounted on the first limb (2) on an axle (17) is supplemented by further pressure means (21, 22, 34), which are freely movable in height relative to the said pressure roller and are jointly driven by the common drive (10, 13) via a further axle (19), to form a pressure and propulsion device, and in that the axle (38) bearing the running rollers (37) is driven by a separate drive axle (18) via an elastic slipping clutch (39).

2. Automatic welder according to Claim 1, characterized in that the pressure and propulsion device exhibits a second pressure roller (21) which runs ahead of the said pressure roller (20) and is entwined with it by a circumferential pressure band (22) and the axle (19) of which is driven by the common drive and is mounted in two holders (25, 26) which are pivotable in vertical planes.

3. Automatic welder according to Claim 2, characterized by a ring roller (34) which is disposed in axis-parallel arrangement alongside the first pressure roller (20) but is seated with play loosely on its axle (17) and which is likewise entwined by the pressure band (22) and is driven by it.

4. Automatic welder according to Claim 3, characterized in that the width of the second pressure roller (21) is equal to the overall width of the first pressure roller (20) and of the ring roller (34) disposed alongside it.

5. Automatic welder according to Claim 2, characterized in that one of the two holders (26) is guided in a vertically movable manner between a vertical wall (24) of the first limb (2) and a pedestal (27) which is attached to this at a distance apart, there being resiliently supported against the pedestal (27) a press shoe (28) which acts upon the pressure band (22).

6. Automatic welder according to Claim 2, characterized by a hot-air nozzle (5) which is disposed between the first pressure roller (20) and second pressure roller (21) beneath the lower strand of the pressure band (22) and forms a pocket between the mutually overlapping films (F1, F2), which pocket is limited on two sides by the pressure rollers (20, 21) and on a third side by a press shoe (28).

7. Automatic welder according to Claim 1, characterized in that the axle (38) bearing the running rollers (37) is adjustable relative to the frame (3) for the purpose of setting the roller running track.

8. Automatic welder according to Claim 7, characterized in that the running-roller axle (38) is mounted on a swivel plate (43), which is linked to the said second limb (4) by a swivel axle (44) and is connected by an adjustment device (47, 48, 49, 50), at a spot remote from the swivel axle, to the limb (4).

9. Automatic welder according to Claim 1, characterized in that the elastic slipping clutch (39) exhibits two elastomeric blocks, which are respectively fastened to the mutually facing ends of the separate drive axle (18) and running-roller axle (38), one of the blocks, for the purpose of setting the contact pressure, being disposed such that it is axially displaceable on its axle relative to the other block.

10. Automatic welder according to Claim 1, the jointly driven axles being respectively provided with mutually aligned belt pulleys (14, 15, 16) entwined by a drive belt (13), characterized by a belt tensioner (30) which reaches over both strands of the belt (13) and is overhung relative to the frame (3).

## Revendications

1. Automate de soudage roulant pour le soudage de grandes surfaces, destiné à souder des feuilles de matière plastique (F1, F2) qui se recouvrent mutuellement sur la largeur d'une zone (S), comprenant un châssis (3) qui est composé d'une première branche (2) s'étendant dans la direction de la marche de l'automate et d'une deuxième branche (4) disposée transversalement à la première, la première branche (2) présentant des moyens (5, 6) servant à souder les feuilles (F1, F2) dans la zone citée, ainsi que des moyens de pression (20, 28) circulant sur cette zone pour charger les feuilles (F1, F2) soudées, la deuxième branche (4) étant munie de galets de roulement (37) montés sur un axe commun (38), et les moyens de pression comprenant un galet de pression (20) qui est relié aux galets de roulement (37), décalés par rapport à lui aussi bien dans la direction de la marche que transversalement à cette direction, par l'intermédiaire d'un entraînement commun (10, 13), caractérisé en ce que le galet de pression (20) qui tourillonne sur la première branche (2), sur un axe (17), est complété par d'autres moyens de pression (21, 22, 34) librement mobiles en hauteur par rapport au galet de pression, entraînés par l'entraînement commun (10, 13) par l'intermédiaire d'un autre axe (19), pour former un dispositif de pression et de propulsion, et en ce que l'axe (38) qui porte les galets de roulement (37) est entraîné par un axe d'entraînement séparé (18) par l'intermédiaire d'un accouplement élastique à glissement (39).

2. Automate de soudage selon la revendication 1, caractérisé en ce que le dispositif de pression et de propulsion comprend un deuxième galet de pression (21) qui roule en avant du galet de pression (20) précité et est embrassé avec ce galet par une bande de pression tournante (22), et dont l'axe (19) est entraîné par l'entraînement commun et est monté rotatif dans deux montures (25, 26) qui peuvent osciller dans des plans verticaux.

3. Automate de soudage selon la revendication 2, caractérisé par un galet annulaire (34) disposé sur un axe parallèle à celui du premier galet de pression (20) mais monté fou sur son axe (17) avec jeu, et qui est embrassé lui aussi par la bande de pression (22) et entraîné par celle-ci.

4. Automate de soudage selon la revendication 3, caractérisé en ce que la largeur du deuxième galet de pression (21) est égale à la largeur cumulée du premier galet (20) et du galet annulaire (34) disposé à côté de celui-ci.

5. Automate de soudage selon la revendication 2, caractérisé en ce qu'une des deux montures (26) est guidée mobile verticalement entre une paroi verticale (24) de la première branche (2) et un socle (27) fixé à cette paroi à un certain écartement, un sabot presseur (28) qui sollicite la bande de pression (22) étant appuyé élastiquement sur le socle (27).

6. Automate de soudage selon la revendication 2, caractérisé par une buse à air chaud (5) disposée entre le premier galet de pression (20) et le deuxième galet de pression (21), au-dessous du brin inférieur de la bande de pression (22), qui forme entre les deux feuilles (F1, F2) superposées une poche qui est limitée sur deux côtés par les galets de pression (20, 21) et sur un troisième côté par un sabot presseur (28).

7. Automate de soudage selon la revendication 1, caractérisé en ce que l'axe (38) qui porte les galets de roulement (37) est réglable par rapport au châssis (3) pour le réglage de la voie de roulement des galets.

8. Automate de soudage selon la revendication 7, caractérisé en ce que l'axe (38) des galets de roulement tourillonne sur une plaque pivotante (43) qui est articulée sur la deuxième branche (4) précitée par un axe de pivotement (44) et est reliée à la branche (4) en un point éloigné de l'axe de pivotement par l'intermédiaire d'un dispositif de réglage (47, 48, 49, 50).

9. Automate de soudage selon la revendication 1, caractérisé en ce que l'accouplement élastique à glissement (39) comprend deux blocs possédant l'élasticité du caoutchouc, qui sont fixés respectivement aux extrémités dirigées l'une vers l'autre de l'axe d'entraînement séparé (18) et de l'axe (38) des galets de roulement, un des blocs étant monté mobile en translation axiale sur son axe pour le réglage de la pression d'application contre l'autre bloc (10).

10. Automate de soudage selon la revendication 1, dans lequel les axes entraînés en commun sont munis de poulies à courroie (14, 15, 16) alignées les unes sur les autres et embrassées par une courroie d'entraînement (13), caractérisé par un tendeur de courroie (30) qui encadre les deux brins de la courroie (13) et est monté flottant par rapport au châssis (3).
